# EUROPÄISCHE PATENTSCHRIFT

(11) **EP 2 267 425 B1**
(45) Veröffentlichungstag und Bekanntmachung des Hinweises auf die Patenterteilung: **08.08.2018**
(21) Anmeldenummer: 10006187.8
(22) Anmeldetag: 15.06.2010
(51) Int. Cl.: G01L 1/22, G01G 3/14, G01G 19/44

(54) **Kraftaufnehmer**
Force transducer
Récepteur de force

(30) Priorität: 23.06.2009 DE 102009030229
(43) Veröffentlichungstag der Anmeldung: 29.12.2010
(73) Patentinhaber: Soehnle Industrial Solutions GmbH, 71522 Backnang (DE)
(72) Erfinder: Gerster, Stephan, 53343 Wachtberg-Pech (DE); Schurr, Michael, 71540 Murrhardt (DE)
(74) Vertreter: Hoffmann, Jürgen

(56) Entgegenhaltungen:
- EP-A1- 0 634 006
- WO-A1-01/25734
- DE-A1- 2 740 668
- DE-A1- 2 741 303
- DE-U1- 29 612 167
- US-A- 3 135 112
- US-A- 3 376 537
- US-A- 5 861 582

## Beschreibung

Die Erfindung betrifft einen Kraftaufnehmer zum Messen von Kräften, die in Längsrichtung einer Stütze wirken, mit einem Krafteinleitungselement, das eine erste Ankoppelvorrichtung zum mechanischen Verbinden des Kraftaufnehmers mit einem Bauteil aufweist, und einem Kraftausleitungselement, das eine zweite Ankoppelvorrichtung zum mechanischen Verbinden des Kraftaufnehmers mit einem anderen Bauteil aufweist, wobei die erste Ankoppelvorrichtung und die zweite Ankoppelvorrichtung auf einer Linie angeordnet sind, die parallel und/oder koaxial zur Richtung der zu messenden Kräfte ist, und wobei der Kraftaufnehmer einen Doppelbiegebalken aufweist, auf dem mehrere Dehnungsmessstreifen angeordnet sind und der zwei zueinander parallele Biegebalken und einen dazwischen angeordneten Durchbruch aufweist.
Die Erfindung betrifft darüber hinaus eine Stütze mit einem Kraftaufnehmer, eine Vorrichtung zum mechanischen Verbinden einer Stütze mit einem Bauteil, ein Fahrwerk und/oder Radaufhängung und einen Sitz, insbesondere einen Krankenstuhl und/oder einen Rollstuhl mit einem Kraftaufnehmer.
Um auf Stützen einwirkende Kräfte zu messen werden üblicherweise Kraftaufnehmer verwendet, die als Stauchzylinder aus einem Hohlmaterial oder einem Vollmaterial ausgeführt sind. Dies unter anderem deshalb, um zu erreichen, dass der Kraftaufnehmer nicht seitlich über die Stütze hinausragt, und um einen räumlichen (Parallel-)Versatz der einwirkenden Kräfte zu vermeiden. Kraftaufnehmer dieses Typs haben jedoch den Nachteil, dass sie empfindlich gegen Störkräfte sind; beispielsweise gegen Knickkräfte, die zusätzlich zu den in Längsrichtung einer Stütze wirkenden Kräften wirken. Solche Knickkräfte treten beispielsweise auf, wenn am unteren Ende einer Stütze ein um eine senkrechte Lenkachse drehbares bzw. schwenkbares Rad mit Nachlauf angeordnet ist.

Aus DE 10 2006 038 630 ist ein Rollstuhl mit einem Stützen aufweisenden Rahmen, der einen Sitz trägt bekannt, wobei zwischen einem Rahmen und den Rädern, vorzugsweise in den Radachsen, Wägezellen zur Gewichtsermittlung vorgesehen sind. Der Rollstuhl hat den Nachteil, dass er nicht im Nachrüstverfahren herstellbar ist, weil dies ausschließlich durch ein aufwändiges und teures Austauschen aller Räder und Radachsen möglich ist.

Aus WO 2005/080927 A1 ist ein mit Kraftmesselementen ausgerüsteter Sitz mit Rädern bekannt. Die Kraftmesselemente sind zwischen den Radaufhängungen und einem Stützen aufweisenden Rahmen angeordnet. Der Sitz ist wegen der nicht um eine senkrechte Achse drehbaren Räder schwer manövrierbar.

DE 27 41 303 A1 offenbart einen Messwandler zur Lastbestimmung mit einem doppelt geführten Balken, wobei der Messwandler insgesamt die Form eines zylindrischen Körpers hat. Die umgefalteten Enden des Messwandlers weisen axiale Bohrungen auf, durch die Dehnungsmessstreifen montiert werden können. Eine besondere bauliche Geometrie zur Vermeidung von Störkräften weist der Messwandler nicht auf.

US 3 376 537 A offenbart eine Kraftmesszelle auf der Basis eines Scherbalkens. Die Meßzelle weist mehrere Dehnungsmessstreifen auf, die gekreuzt in einer Ebene parallel zu den Scherachsen verlaufen und auf einer dünnen Scheibe angebracht sind.

US 5 861 582 A offenbart eine nachrüstbare Wiegevorrichtung für Krankenhausbetten. Die Vorrichtung weist keinen Doppelbiegebalken auf. Sie funktioniert in Kombination mit einer pneumatischen Hebe- und Senkvorrichtung, wobei nur mit geöffnetem pneumatischen Ablassventil und ganz abgesenktem Bett eine Kraftmessung möglich ist.

WO 01/25734 A1 offenbart einen Rollstuhl mit mehreren Kraftmesszellen, wobei zwei Kraftmesszellen auf der jeweiligen Achse eines jeden Hinterrades angebracht sind und die anderen Kraftmesszellen an den Vorderrädern.

DE 296 12 167 U1 offenbart eine Wägezelle mit einem gehäusefesten Bereich, mit einem Lastaufnahmebereich, auf den sich eine Waagschale abstützt. Der Lastaufnahmebereich ist mit einem oberen Lenker und einem unteren Lenker, die als Parallelführung ausgebildet sind, mit dem gehäusefesten Bereich verbunden. Der gehäusefeste Bereich weist mindestens zwei Bohrungen zur Befestigung der Wägezelle an einem Gehäuse und Einschnitte zur Entkopplung des Anschraubbereiches, um die Befestigungsbohrungen herum auf. Der gehäusefeste Bereich weist einen von oberen und einen von unteren kommenden Einschnitt auf, wobei der von unten kommende Einschnitt durch einen abknickenden, waagerechten Teil verlängert ist, und wobei beide Bohrungen zur Befestigung der Wägezelle vertikal verlaufen und die eine Bohrung in dem abknickenden waagerechten Teil des von unten kommenden Einschnittes endet.

EP 0 634 006 A1 offenbart eine Lastzelle, die aus einem geeigneten Metall gebildet ist und die vertikal beabstandete und im Allgemeinen parallele Elemente aufweist. Die vertikalen Elemente sind mittels Flexuren verbunden. Zwischen den vertikalen Elementen ist ein Biegebalken angeordnet, der mit den Flexuren verbunden ist. Wenn eine Last vertikal und senkrecht auf eines der horizontalen Elemente aufgebracht wird, verformt sich die Lastzelle elastisch parallelogrammförmig, um dadurch eine Scherkraft auf den Biegebalken zu übertragen, und um eine schubinduzierte Biegung des Biegebalkens zu verursachen. Dehnungsmessstreifen oder Frequenzresonatorkristallelemente erfassen die schubinduzierte Biegung und sind mit einer elektronischen Schaltung verbunden, die ein Ausgangssignal erzeugt, das durch eine Verformung des Biegebalkens verursacht wird.

Es ist die Aufgabe der vorliegenden Erfindung, einen Kraftaufnehmer zum Messen von Kräften, die in Längsrichtung einer Stütze wirken, anzugeben, der eine präzise Messung erlaubt, der hinsichtlich des Einflusses von Quer- und Störkräften weitgehend unempfindlich ist und der darüber hinaus kompakt herstellbar ist.
Die Aufgabe wird durch einen Kraftaufnehmer gelöst, der dadurch gekennzeichnet ist, dass der an den Doppelbiegebalken angrenzende Teil des Krafteinleitungselements und/oder der an den Doppelbiegebalken angrenzende Teil des Kraftausleitungselements eine durchgehende Aussparung aufweist, wobei die Richtung der durchgehenden Aussparung in der Projektion auf eine zur Längsrichtung senkrechte Ebene senkrecht zur Richtung des Durchbruchs verläuft.
Der erfindungsgemäße Kraftaufnehmer hat den Vorteil, dass Störkräfte, die durch die Kraftbelastung der Stütze zusätzlich zu den in Längsrichtung der Stütze wirkenden Kräften auftreten, den Doppelbiegebalken im Bereich der Dehnungsmessstreifen nicht oder zumindest in verringerten Maße verformen.
Eine weitere Aufgabe der Erfindung ist es eine Stütze mit einem Kraftaufnehmer und Vorrichtung zum mechanischen Verbinden einer Stütze mit einem Bauteil anzugeben, die auch beim Auftreten von Störkräften eine präzise Messung der in Längsrichtung wirkenden Kräfte erlaubt.
Es ist eine weitere Aufgabe der Erfindung, Fahrwerk und/oder Radaufhängung, sowie einen Rollstuhl anzugeben, bei denen eine gute Lenkbarkeit und gleichzeitig trotzdem eine präzise Kraft bzw. Gewichtsmessung ermöglicht ist.
Der erfindungsgemäße Kraftaufnehmer hat den Vorteil, dass eine Messung von in Längsrichtung einer Stütze wirkenden Kräfte weitgehend unabhängig von Störkräften, insbesondere von Knickkräften, präzise gemessen werden kann. Hierbei kann insbesondere vorgesehen sein, dass der Doppelbiegebalken eine Parallelogrammführung aufweist.
Die Erfindung hat den weiteren Vorteil, dass der Kraftaufnehmer platzsparend ausgebildet ist. Dadurch, dass der an den Doppelbiegebalken angrenzende Teil des Krafteinleitungselements und/oder der an den Doppelbiegebalken angrenzende Teil des Kraftausleitungselements die durchgehende Aussparung aufweist, kann der bzw. können die Dehnungsmessstreifen weitgehend ohne die Gefahr von Störeinflüssen dicht am Krafteinleitungselement und/oder am Kraftausleitungselement positioniert werden, was insgesamt eine kleine Bauform - ohne Beeinflussung des zulässigen Belastungsbereichs und/oder Messbereichs - ermöglicht.
Es ist vorgesehen, dass der Kraftaufnehmer ein Krafteinleitungselement und ein Kraftausleitungselement aufweist. Es ist außerdem vorgesehen, dass das Krafteinleitungselement eine erste Ankoppelvorrichtung zum mechanischen Verbinden des Kraftaufnehmers mit einem Bauteil, insbesondere mit einer Stütze, aufweist. Darüber hinaus ist vorgesehen, dass das Kraftausleitungselement eine zweite Ankoppelvorrichtung zum mechanischen Verbinden des Kraftaufnehmers mit einem weiteren Bauteil, insbesondere mit einer weiteren Stütze, aufweist. Besonders vorteilhaft ist es, dass die erste Ankoppelvorrichtung und die zweite Ankoppelvorrichtung auf einer Linie angeordnet sind, die parallel und/oder koaxial zur Richtung der zu messenden Kräfte ist. Zusätzlich kann vorgesehen sein, dass die Projektionen der ersten und der zweiten Ankoppelvorrichtung auf eine Ebene senkrecht zur Richtung der zu messenden Kräfte im Wesentlichen deckungsgleich sind. Diese Ausführung hat insbesondere den Vorteil, dass es keinen Versatz der wirkenden Kräfte zwischen Einleitung und Ausleitung gibt.
Eine kompakte Bauform und eine sichere mechanische Verbindung zwischen Kraftaufnehmer und Stütze und/oder zwischen Kraftaufnehmer und einem weiteren Bauteil, insbesondere einer weiteren Stütze, werden bei einer besonderen Ausführung dadurch erreicht, dass die erste Ankoppelvorrichtung und/oder die zweite Ankoppelvorrichtung scheibenartig ausgebildet sind. Beispielsweise kann außerdem vorgesehen sein, dass die erste Ankoppelvorrichtung und/oder die zweite Ankoppelvorrichtung jeweils eine Gewindebohrung aufweisen.
Bei einer besonderen Ausführung, die eine kompakte Bauform erlaubt, ist das Kraftausleitungselement und/oder das Kraftausleitungselement jeweils als Winkelarm ausgebildet.
Eine ganz besonders kompakte Bauform kann in erfindungsgemäßer Weise dadurch erreicht werden, dass der Doppelbiegebalken und das Krafteinleitungselement und/oder der Doppelbiegebalken und das Kraftausleitungselement gemeinsam einstückig hergestellt sind. Insbesondere wird hierdurch Bauraum, der ansonsten für Befestigungselemente benötigt würde, eingespart und gleichzeitig die Stabilität der Ankopplung erhöht. Besonders präzise ausführbar ist eine Ausführungsform, bei der der Doppelbiegebalken und das Krafteinleitungselement und/oder der Doppelbiegebalken und das Kraftausleitungselement gemeinsam aus einem Stück gefräst sind.
Bei einer besonders kompakt ausführbaren Ausgestaltung, die zusätzlich den Vorteil bietet - zumindest teilweise - in einer rohrförmigen Stütze angeordnet werden zu können, ist der Kraftaufnehmer im Wesentlichen zylinderförmig ausgebildet. Beispielsweise kann dieser Kraftaufnehmer in einer teleskopisch aufgebauten Stütze angeordnet sein oder Bestandteil einer teleskopisch aufgebauten Stütze sein. Vorteilhafter Weise kann der Kraftaufnehmer hierdurch leicht unsichtbar oder verdeckt untergebracht werden. Insbesondere erlaubt eine solche Bauform auch eine derart kompakte Ausbildung, dass vorhandene Stützen oder Rollstühle oder Krankenstühle weitgehend ohne oder mit vernachlässigbar kleinem Höhenunterschied nachgerüstet werden können. Hierzu kann auch dadurch beigetragen werden, indem der an den Doppelbiegebalken angrenzende Teil des Krafteinleitungselements und/oder der an den Doppelbiegebalken angrenzende Teil des Kraftausleitungselements im Wesentlichen einen sichelförmigen oder einen scheibenabschnittähnlichen Querschnitt aufweist.
Insbesondere kann vorgesehen sein, dass auf der dem Krafteinleitungselement zugewandten Seite des Doppelbiegebalkens zumindest ein, vorzugsweise 2 oder 4, Dehnungsmessstreifen angeordnet ist bzw. sind. Alternativ oder zusätzlich kann vorgesehen sein, dass auf der dem Kraftausleitungselement zugewandten Seite des Doppelbiegebalkens zumindest ein, vorzugsweise 2 oder 4, Dehnungsmessstreifen angeordnet ist bzw. sind.
Es ist vorgesehen, dass das Krafteinleitungselement und/oder das Kraftausleitungselement zumindest eine durchgehende Aussparung aufweisen. Durch die durchgehende Aussparung und insbesondere durch deren geschickte räumliche Anordnung kann wirkungsvoll verhindert werden, dass sich Störkräfte in Störspannungen der Biegebalken im Bereich der Dehnungsmessstreifen übersetzen.

Es kann auch vorgesehen sein, dass die durchgehende Aussparung derart in dem Krafteinleitungselement und/oder in dem Kraftausleitungselement derart positioniert ist, dass der effektive Abstand des Krafteinleitungselements und/oder des Kraftausleitungselements zu zumindest einem Dehnungsmessstreifen vergrößert ist. Beispielsweise kann auch vorgesehen sein, dass die durchgehende Aussparung derart in dem Krafteinleitungselement und/oder dem Kraftausleitungselement benachbart zu einem Dehnungsmessstreifen positioniert sind.
In besonders vorteilhafter Weise kann vorgesehen sein, dass der Kraftaufnehmer Durchführungen für Zuleitungen aufweist. Diese können beispielsweise im Bereich der durchgehenden Aussparung angeordnet sein oder selbst als solche dienen.
Besonders vorteilhaft ist eine mit einem erfindungsgemäßen Kraftaufnehmer ausgerüstete Stütze. Auch von besonderem Vorteil ist eine Vorrichtung zum mechanischen Verbinden einer Stütze mit einem Bauteil, die einen erfindungsgemäßen Kraftaufnehmer aufweist. Hierbei kann in vorteilhafter Weise vorgesehen sein, dass der Kraftaufnehmer in Richtung der Längsrichtung der Stütze wirkende Kräfte - vorzugsweise unabhängig von aus anderen Richtungen auf die Stütze wirkenden Kräften - misst. In besonders vorteilhafter Weise können die Stütze und/oder die Vorrichtung Teil eines Fahrwerks und/oder einer Radaufhängung sein.
Besonders vorteilhaft im Hinblick auf eine kompakte Bauform und im Hinblick auf die Möglichkeit eines verdeckten oder optisch einheitlichen Aufbaus ist eine Ausführung, bei der der Kraftaufnehmer den gleichen oder einen kleineren Durchmesser aufweist wie die Stütze. Insbesondere kann vorgesehen sein, dass der Kraftaufnehmer zumindest teilweise in die Stütze einführbar ist oder zumindest teilweise in dieser angeordnet ist.
Besonders vorteilhaft sind ein mit einem erfindungsgemäßen Kraftaufnehmer ausgerüstetes Fahrwerk und eine mit einem erfindungsgemäßen Kraftaufnehmer ausgerüstete Radaufhängung. Hierbei kann insbesondere im Hinblick auf eine gute Lenkbarkeit oder Manövrierbarkeit vorgesehen sein, dass ein um eine Radachse drehbares und um eine Lenkachse schwenkbares Rad vorgesehen ist. Ganz besonders vorteilhaft ist eine Ausführung, bei der die Radachse und die Lenkachse einen von Null verschiedenen Abstand zueinander aufweisen, weil sich bei dieser Ausführung das Rad automatisch relativ zur Fahrrichtung ausrichtet. Beim Verschwenken des Rades um die Lenkachse ändert sich die Richtung der auf die Stütze bzw. das Fahrwerk bzw. die Randaufhängung wirkenden Knickkräfte, was jedoch in vorteilhafter Weise Dank des speziellen Aufbaus des erfindungsgemäßen Kraftaufnehmers weitgehend keinen Einfluss auf die Messung der in Längsrichtung der Stütze wirkenden Kräfte bzw. der Gewichtskräfte hat.
Insbesondere bei einem Sitz, insbesondere Krankenstuhl und/oder Rollstuhl, der mit zumindest einem erfindungsgemäßen Kraftaufnehmer und/oder mit zumindest einer erfindungsgemäßen Stütze oder einer erfindungsgemäßen Vorrichtung und/oder mit zumindest einem erfindungsgemäßen Fahrwerk ausgerüstet ist, wirken sich die Vorteile einer guten Manövrierbarkeit bei gleichzeitig genauer Messbarkeit des Gewichtes des auf dem Sitz befindlichen Person, vorteilhaft aus.
In der Zeichnung ist der Erfindungsgegenstand schematisch dargestellt und wird anhand der Figuren nachfolgend beschrieben, wobei gleich wirkende Elemente mit denselben Bezugszeichen versehen sind. Dabei zeigen:
- Fig. 1: einen erfindungsgemäßen Kraftaufnehmer,
- Fig. 2: eine erfindungsgemäße Stütze und
- Fig. 3: einen erfindungsgemäßen Rollstuhl.

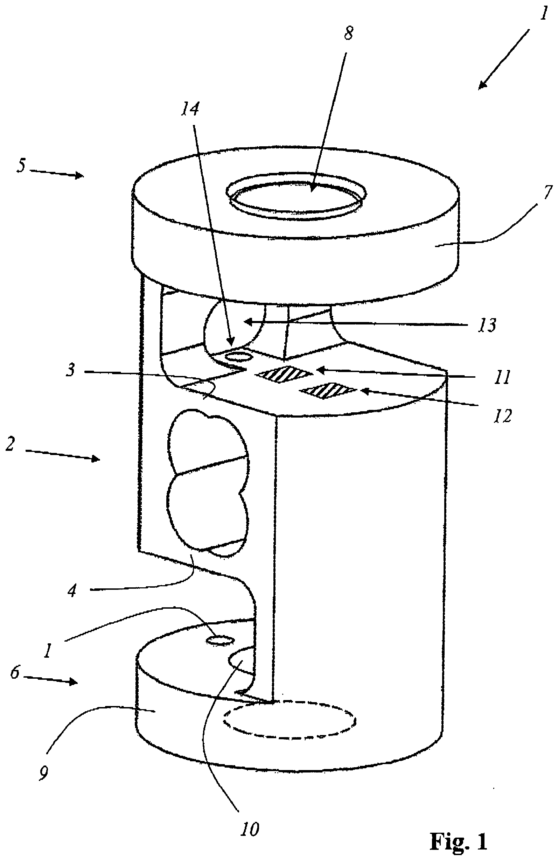

Fig. 1 zeigt einen erfindungsgemäßen Kraftaufnehmer 1 mit einem Doppelbiegebalken 2, der einen oberen Biegebalken 3 und einen unteren Biegebalken 4 aufweist. Der Doppelbiegebalken 2 ist einstückig mit einem Krafteinleitungselement 5 und einem Kraftausleitungselement 6 hergestellt. Das Krafteinleitungselement 5 weist eine erste Ankoppelvorrichtung 7 mit einer Gewindebohrung 8 zum mechanischen Verbinden des Kraftaufnehmers 1 mit einem Bauteil, insbesondere mit einer Stütze, auf. Analog weist das Kraftausleitungselement 6 eine zweite Ankoppelvorrichtung 9 mit einer weiteren Gewindebohrung 10 zum mechanischen Verbinden des Kraftaufnehmers mit einem weiteren Bauteil, insbesondere mit einer weiteren Stütze, auf. Die erste Ankoppelvorrichtung 5 und die zweite Ankoppelvorrichtung 6 sind auf einer Linie angeordnet, die parallel und koaxial zur Richtung der zu messenden Kräfte ist.
Auf dem Doppelbiegebalken 2 sind zwei Dehnungsmessstreifen 11, 12 angeordnet. Das Krafteinleitungselement 5 weist in dem die Ankoppelvorrichtung 7 mit dem Doppelbiegebalken 2 verbindenden Teil eine durchgehende Aussparung 13 auf, die derart angeordnet und positioniert ist, dass Störkräfte den Doppelbiegebalken im Bereich der Dehnungsmessstreifen 11, 12 nicht oder zumindest in verringertem Maße verformen. Der Kraftaufnehmer 1 ist obwohl er für hohe Kraftbelastungen von bis zum 200 Kg ausgelegt ist, mit einem Durchmesser von 40 mm besonders platzsparend ausgebildet. Hierzu trägt bei, dass der an den Doppelbiegebalken 2 angrenzende Teil des Krafteinleitungselements 5 - abgesehen von der durchgehenden Aussparung 13, einen kreisabschnittähnlichen Querschnitt aufweist und dass die durchgehende Aussparung 13 derart in dem Krafteinleitungselement und derart positioniert ist, dass der effektive Abstand des Krafteinleitungselementes 5 dem Dehnungsmessstreifen 11 vergrößert ist. Die Zuleitungen (nicht gezeigt) zu den Dehnungsmessstreifen 11, 12 werden durch eine Durchführung 14 im Bereich der durchgehenden Aussparung 13 verlegt. Auf der Unterseite des Doppelbiegebalkens 2 sind ebenfalls - in der Figur jedoch nicht gezeigte - Dehnungsmessstreifen angeordnet. Auch das Kraftausleitungselement ist mit einer weiteren - nicht gezeigten - durchgehenden Aussparung versehen.

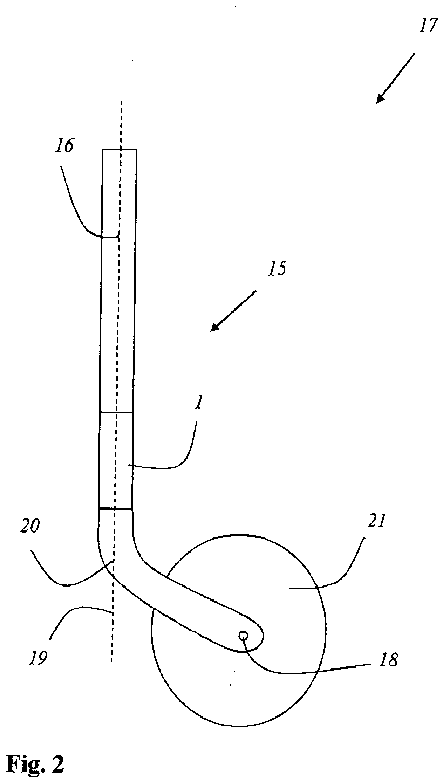

Fig. 2 zeigt eine erfindungsgemäße Stütze 15, mit einem Rohr 16 an das einen erfindungsgemäßen, hier nicht im Detail dargestellten Kraftaufnehmer 1 angekoppelt ist. Die Stütze ist Teil eines Fahrwerks 17, das ein um eine Radachse 18 drehbares und um eine Lenkachse 19 schwenkbares, an einer Gabel 20 angeordnetes Rad 21 aufweist. Die Gabel 20 ist um die Lenkachse 19 drehbar an dem Kraftausleitungselement des Kraftaufnehmers 1 befestigt. Trotz der exzentrischen Knickkräfte, die auf den Kraftaufnehmer 1 wirken, ermittelt dieser präzise die von oben auf das Fahrwerk wirkende Gewichtskraft. Dies bei gleichbleibender Genauigkeit unabhängig von der Drehstellung der Gabel 20 relativ zum Kraftaufnehmer 1.

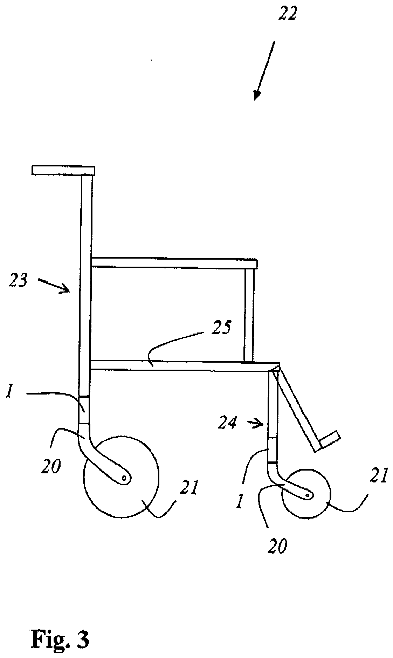

Fig. 3 zeigt einen erfindungsgemäßen Rollstuhl 22 mit hinteren Stützen 23 und vorderen Stützen 24. Es sind Kraftaufnehmer 1 vorgesehen, die die Stützen 23, 24 drehbar mit gebogenen Gabeln 20 verbinden. An den Gabeln 20 sind Räder 21 angeordnet. Mit Hilfe der Kraftaufnehmer 1, die an eine gemeinsame Auswerteeinheit angeschlossen sind, kann das Gewicht einer auf der Sitzfläche 25 des Rollstuhls 22 sitzenden Person - unabhängig von der Drehstellung der Gabeln 20 relativ zu den Kraftaufnehmern 1 - präzise ermittelt werden.
Die Erfindung wurde in Bezug auf besondere Ausführungsformen beschrieben. Es ist jedoch selbstverständlich, dass Änderungen und Abwandlungen durchgeführt werden können, ohne dabei den Schutzbereich der nachstehenden Ansprüche zu verlassen.

### Bezugszeichenliste

- 1: Kraftaufnehmer
- 2: Doppelbiegebalken
- 3: oberer Biegebalken
- 4: unterer Biegebalken
- 5: Krafteinleitungselement
- 6: Kraftausleitungselement
- 7: erste Ankoppelvorrichtung
- 8: Gewindebohrung
- 9: zweite Ankoppelvorrichtung
- 10: weitere Gewindebohrung
- 11: Dehnungsmessstreifen
- 12: Dehnungsmessstreifen
- 13: durchgehende Aussparung
- 14: Durchführung
- 15: Stütze
- 16: Rohr
- 17: Fahrwerk
- 18: Radachse
- 19: Lenkachse
- 20: Gabel
- 21: Rad
- 22: Rollstuhl
- 23: hintere Stützen
- 24: vordere Stützen
- 25: Sitzfläche

## Patentansprüche

1. Kraftaufnehmer (1) zum Messen von Kräften, die in Längsrichtung einer Stütze wirken, mit einem Krafteinleitungselement (5), das eine erste Ankoppelvorrichtung (7) zum mechanischen Verbinden des Kraftaufnehmers (1) mit einem Bauteil aufweist, und einem Kraftausleitungselement (6),
das eine zweite Ankoppelvorrichtung (9) zum mechanischen Verbinden des Kraftaufnehmers (1) mit einem anderen Bauteil aufweist, wobei die erste Ankoppelvorrichtung (7) und die zweite Ankoppelvorrichtung (9) auf einer Linie angeordnet sind, die parallel und/oder koaxial zur Richtung der zu messenden Kräfte ist, und wobei der Kraftaufnehmer (1) einen Doppelbiegebalken (2) aufweist, auf dem mehrere Dehnungsmessstreifen angeordnet sind und der zwei zueinander parallele Biegebalken und einen dazwischen angeordneten Durchbruch aufweist, **dadurch gekennzeichnet, dass** der an den Doppelbiegebalken (2) angrenzende Teil des Krafteinleitungselements und/oder der an den Doppelbiegebalken (2) angrenzende Teil des Kraftausleitungselements eine durchgehende Aussparung (13) aufweist, wobei die Richtung der durchgehenden Aussparung (13) in der Projektion auf eine zur Längsrichtung senkrechte Ebene senkrecht zur Richtung des Durchbruchs verläuft.

2. Kraftaufnehmer (1) nach Anspruch 1, **dadurch gekennzeichnet, dass**
das Krafteinleitungselement (5) und/oder das Kraftausleitungselement (6) jeweils als Winkelarm ausgebildet ist.

3. Kraftaufnehmer (1) nach Anspruch 1 oder 2, **dadurch gekennzeichnet, dass** der Doppelbiegebalken (2) und das Krafteinleitungselement (5) und/oder der Doppelbiegebalken (2) und das Kraftausleitungselement (6) gemeinsam einstückig hergestellt sind und/oder dass der Doppelbiegebalken (2) und das Krafteinleitungselement (5) und/oder der Doppelbiegebalken (2) und das Kraftausleitungselement (6) gemeinsam aus einem Stück gefräst sind.

4. Kraftaufnehmer (1) nach einem der Ansprüche 1 bis 3, **dadurch gekennzeichnet, dass** der Kraftaufnehmer (1) im Wesentlichen zylinderförmig aufgebaut ist.

5. Kraftaufnehmer (1) nach einem der Ansprüche 1 bis 4, **dadurch gekennzeichnet, dass** der an den Doppelbiegebalken (2) angrenzende Teil des Krafteinleitungselements und/oder der an den Doppelbiegebalken (2) angrenzende Teil des Kraftausleitungselements im Wesentlichen einen sichelförmigen oder einen scheibenabschnittähnlichen Querschnitt aufweist.

6. Kraftaufnehmer (1) nach einem der Ansprüche 1 bis 5, **dadurch gekennzeichnet, dass** auf der dem Krafteinleitungselement (5) zugewandten Seite des Doppelbiegebalkens (2) zumindest ein, vorzugsweise 2 oder 4, Dehnungsmessstreifen (11, 12) angeordnet ist und/oder dass auf der dem Kraftausleitungselement (6) zugewandten Seite des Doppelbiegebalkens (2) zumindest ein, vorzugsweise 2 oder 4, Dehnungsmessstreifen (11, 12) angeordnet ist.

7. Kraftaufnehmer nach einem der Ansprüche 1 bis 6, **dadurch gekennzeichnet, dass** die durchgehende Aussparung (13) derart in dem Krafteinleitungselement (5) und/oder dem Kraftausleitungselement (6) positioniert ist, dass der effektive Abstand des Krafteinleitungselement (5) und/oder des Kraftausleitungselements (6) zu zumindest einem Dehnungsmessstreifen (11, 12) vergrößert ist.

8. Stütze (15) mit einem Kraftaufnehmer (1) nach einem der Ansprüche 1 bis 7 oder Vorrichtung zum mechanischen Verbinden einer Stütze (23) mit einem Bauteil, insbesondere mit einer weiteren Stütze (24) oder einer Radaufhängung, wobei die Vorrichtung einen Kraftaufnehmer (1) nach einem der Ansprüche 1 bis 8 aufweist.

9. Fahrwerk (17) mit einem Kraftaufnehmer (1) nach einem der Ansprüche 1 bis 7 und/oder Radaufhängung mit einem Kraftaufnehmer (1) nach einem der Ansprüche 1 bis 7.

10. Stütze (15) und/oder Vorrichtung nach Anspruch 8, **dadurch gekennzeichnet, dass** der Kraftaufnehmer (1) in Richtung der Längsrichtung der Stütze (15) wirkende Kräfte misst und/oder dass der Kraftaufnehmer (1) in Richtung der Längsrichtung der Stütze (15) wirkende Kräfte unabhängig von aus anderen Richtungen auf die Stütze (15) wirkenden Kräften misst.

11. Stütze (15) und/oder Vorrichtung nach einem der Ansprüche 8 oder 10, **dadurch gekennzeichnet, dass** der Kraftaufnehmer (1) den gleichen oder einen kleineren Durchmesser aufweist wie die Stütze (15) und/oder dass der Kraftaufnehmer (1) zumindest teilweise in die Stütze (15) einführbar ist.

12. Fahrwerk (17) und/oder Radaufhängung nach Anspruch 9, **dadurch gekennzeichnet, dass** ein um eine Radachse (18) drehbares und um eine Lenkachse (19) schwenkbares Rad (21) vorgesehen ist.

13. Sitz, insbesondere Krankenstuhl und/oder Rollstuhl (22), mit zumindest einem Kraftaufnehmer (1) nach einem der Ansprüche 1 bis 7 und/oder mit zumindest einer Stütze (15) oder einer Vorrichtung nach einem der Ansprüche 8, 10 oder 11 oder mit zumindest einem Fahrwerk (17) oder eine Radaufhängung nach einem der Ansprüche 8 bis 12.

## Claims

1. Force transducer (1) for measuring forces which act in the longitudinal direction of a support, having a force input element (5) which has a first coupling device (7) for mechanically connecting the force transducer (1) to a component, and
a force output element (6) which has a second coupling device (9) for mechanically connecting the force transducer (1) to another component, the first coupling device (7) and the second coupling device (9) being arranged on a line which is parallel to and/or coaxial with the direction of the forces to be measured, and the force transducer (1) having a double bending beam (2) on which a plurality of strain gauges are arranged and which has two bending beams parallel to each other and an aperture arranged in between, **characterized in that** the part of the force input element that adjoins the double bending beam (2) and/or the part of the force output element that adjoins the double bending beam (2) has a continuous cut-out (13), wherein the direction of the continuous cut-out (13) in the projection onto a plane perpendicular to the longitudinal direction extends at right angles to the direction of the aperture.

2. Force transducer (1) according to Claim 1, **characterized in that** the force input element (5) and/or the force output element (6) are each formed as an angled arm.

3. Force transducer (1) according to Claim 1 or 2, **characterized in that** the double bending beam (2) and the force input element (5) and/or the double bending beam (2) and the force output element (6) are produced jointly in one piece, and/or **in that** the double bending beam (2) and the force input element (5) and/or the double bending beam (2) and the force output element (6) are jointly milled from one piece.

4. Force transducer (1) according to one of Claims 1 to 3, **characterized in that** the force transducer (1) is substantially cylindrical.

5. Force transducer (1) according to one of Claims 1 to 4, **characterized in that** the part of the force input element that adjoins the double bending beam (2) and/or the part of the force output element that adjoins the double bending beam (2) has a cross section that is substantially sickle-shaped or similar to a section of a disc.

6. Force transducer (1) according to one of Claims 1 to 5, **characterized in that** at least one, preferably 2 or 4, strain gauges (11, 12) is/are arranged on the side of the double bending beam (2) that faces the force input element (5), and/or in that at least one, preferably 2 or 4, strain gauges (11, 12) is/are arranged on the side of the double bending beam (2) that faces the force output element (6).

7. Force transducer according to one of Claims 1 to 6, **characterized in that** the continuous cut-out (13) is positioned in the force input element (5) and/or the force output element (6) in such a way that the effective distance of the force input element (5) and/or the force output element (6) to at least one strain gauge (11, 12) is enlarged.

8. Support (15) having a force transducer (1) according to one of Claims 1 to 7 or device for mechanically connecting a support (23) to a component, in particular to a further support (24) or a wheel suspension, wherein the device has a force transducer (1) according to one of Claims 1 to 8.

9. Chassis (17) having a force transducer (1) according to one of Claims 1 to 7 and/or wheel suspension having a force transducer (1) according to one of Claims 1 to 7.

10. Support (15) and/or device according to Claim 8, **characterized in that** the force transducer (1) measures forces acting in the direction of the longitudinal direction of the support (15), and/or in that the force transducer (1) measures forces acting in the direction of the longitudinal direction of the support (15), irrespective of forces acting on the support (15) from other directions.

11. Support (15) and/or device according to either of Claims 8 and 10, **characterized in that** the force transducer (1) has a diameter that is the same as or smaller than the support (15), and/or **in that** the force transducer (1) can be inserted at least partly into the support (15).

12. Chassis (17) and/or wheel suspension according to Claim 9, **characterized in that** a wheel (21) that is rotatable about a wheel axis (18) and pivotable about a steering axis (19) is provided.

13. Seat, in particular invalid chair and/or wheelchair (22), having at least one force transducer (1) according to one of Claims 1 to 7 and/or having at least one support (15) or a device according to one of Claims 8, 10 or 11, or having at least one chassis (17) or a wheel suspension according to one of Claims 8 to 12.

## Revendications

1. Récepteur de force (1) pour mesurer des forces qui agissent dans la direction longitudinale d'un support, comprenant un élément d'introduction de force (5) qui présente un premier dispositif d'accouplement (7) pour la liaison mécanique du récepteur de force (1) à un composant, et un élément d'évacuation de force (6) qui présente un deuxième dispositif d'accouplement (9) pour la liaison mécanique du récepteur de force (1) à un autre composant, le premier dispositif d'accouplement (7) et le deuxième dispositif d'accouplement (9) étant disposés sur une ligne qui est parallèle et/ou coaxiale à la direction des forces à mesurer, et le récepteur de force (1) présentant une barre à double flexion (2) sur laquelle sont disposées plusieurs jauges extensométriques et qui présente deux barres de flexion parallèles l'une à l'autre et un orifice disposé entre elles, **caractérisé en ce que** la partie de l'élément d'introduction de force adjacente à la barre à double flexion (2) et/ou la partie de l'élément d'évacuation de force adjacente à la barre à double flexion (2) présente un évidement continu (13), la direction de l'évidement continu (13) en projection sur un plan perpendiculaire à la direction longitudinale s'étendant perpendiculairement à la direction de l'orifice.

2. Récepteur de force (1) selon la revendication 1, **caractérisé en ce que** l'élément d'introduction de force (5) et/ou l'élément d'évacuation de force (6) sont à chaque fois réalisés sous forme de bras coudé.

3. Récepteur de force (1) selon la revendication 1 ou 2, **caractérisé en ce que** la barre à double flexion (2) et l'élément d'introduction de force (5) et/ou la barre à double flexion (2) et l'élément d'évacuation de force (6) sont fabriqués d'une seule pièce en commun et/ou **en ce que** la barre à double flexion (2) et l'élément d'introduction de force (5) et/ou la barre à double flexion (2) et l'élément d'évacuation de force (6) sont fraisés ensemble à partir d'une seule pièce.

4. Récepteur de force (1) selon l'une quelconque des revendications 1 à 3, **caractérisé en ce que** le récepteur de force (1) est réalisé essentiellement sous forme cylindrique.

5. Récepteur de force (1) selon l'une quelconque des revendications 1 à 4, **caractérisé en ce que** la partie de l'élément d'introduction de force adjacente à la barre à double flexion (2) et/ou la partie de l'élément d'évacuation de force adjacente à la barre à double flexion (2) présentent essentiellement une section transversale en forme de croissant ou analogue à une portion de disque.

6. Récepteur de force (1) selon l'une quelconque des revendications 1 à 5, **caractérisé en ce que** du côté de la barre à double flexion (2) tourné vers l'élément d'introduction de force (5) est disposé au moins une, de préférence 2 ou 4, jauges extensométriques (11, 12) et/ou **en ce que** du côté de la barre à double flexion (2) tourné vers l'élément d'évacuation de force (6) est disposée au moins une, de préférence 2 ou 4, jauges extensométriques (11, 12).

7. Récepteur de force selon l'une quelconque des revendications 1 à 6, **caractérisé en ce que** l'évidement continu (13) est positionné dans l'élément d'introduction de force (5) et/ou dans l'élément d'évacuation de force (6) de telle sorte que la distance effective de l'élément d'introduction de force (5) et/ou de l'élément d'évacuation de force (6) à au moins une jauge extensométrique (11, 12) soit augmentée.

8. Support (15) comprenant un récepteur de force (1) selon l'une quelconque des revendications 1 à 7, ou dispositif pour la liaison mécanique d'un support (23) à un composant, en particulier à un autre support (24) ou à une suspension de roue, le dispositif présentant un récepteur de force (1) selon l'une quelconque des revendications 1 à 8.

9. Châssis (17) comprenant un récepteur de force (1) selon l'une quelconque des revendications 1 à 7, et/ou suspension de roue comprenant un récepteur de force (1) selon l'une quelconque des revendications 1 à 7.

10. Support (15) et/ou dispositif selon la revendication 8, **caractérisés en ce que** le récepteur de force (1) mesure des forces agissant dans la direction de la direction longitudinale du support (15) et/ou **en ce que** le récepteur de force (1) mesure des forces agissant dans la direction de la direction longitudinale du support (15) indépendamment de forces agissant à partir d'autres directions sur le support (15).

11. Support (15) et/ou dispositif selon l'une quelconque des revendications 8 ou 10, **caractérisés en ce que** le récepteur de force (1) présente le même diamètre ou un diamètre inférieur au support (15) et/ou **en ce que** le récepteur de force (1) peut être introduit au moins en partie dans le support (15).

12. Châssis (17) et/ou suspension de roue selon la revendication 9, **caractérisés en ce qu'**il est prévu une roue (21) pouvant tourner autour d'un axe de roue (18) et pouvant pivoter autour d'un axe de direction (19).

13. Siège, en particulier chaise de malade et/ou fauteuil roulant (22), comprenant au moins un récepteur de force (1) selon l'une quelconque des revendications 1 à 7 et/ou comprenant au moins un support (15) ou un dispositif selon l'une quelconque des revendications 8, 10 ou 11, comprenant au moins un châssis (17) ou une suspension de roue selon l'une quelconque des revendications 8 à 12.
